Europäisches Patentamt

European Patent Office

Office européen des brevets

(11) Veröffentlichungsnummer: **0 178 549**
**A1**

# EUROPÄISCHE PATENTANMELDUNG

(21) Anmeldenummer: 85112550.0

(22) Anmeldetag: 03.10.85

(51) Int. Cl.⁴: **H04Q 11/04**

(30) Priorität: 19.10.84 DE 3438493

(43) Veröffentlichungstag der Anmeldung:
23.04.86 Patentblatt 86/17

(84) Benannte Vertragsstaaten:
AT BE CH DE FR GB IT LI NL SE

(71) Anmelder: **Siemens Aktiengesellschaft**
**Berlin und München Wittelsbacherplatz 2**
**D-8000 München 2(DE)**

(72) Erfinder: **Prey, Gerhard, Ing. grad.**
**Kiefernstrasse 24**
**D-8031 Eichenau(DE)**
Erfinder: **Haslauer, Hans-Jürgen, Dipl.-Ing.**
**Im Schwaigfeld 40**
**D-8037 Olching(DE)**

(54) Schaltungsanordnung für Fernmeldeanlagen, insbesondere Fernsprechvermittlungsanlagen, mit Sendekanälen für Codezeichen.

(57) Einer Anzahl von Sendekanälen (K) sind mehrere aber vergleichsweise weniger Nachrichtenübertragungscodierer (C), die nur zur Codierung und Aussendung von individuellen Nachrichten dienen, gemeinsam zugeordnet. Ein allen Sendekanälen gemeinsamer Ruhezustand-Signalisierungs-Codierer dient einer beständigen Aussendung eines Ruhezustands-Codes. Einem aus dem Ruhezustand in den Nachrichtenübertragungs-Zustand übergehenden Sendekanal wird jeweils ein freier Nachrichtenübertragungscodierer für die Dauer des betreffenden Nachrichtenübertragungsvorganges für den jeweils kanalindividuellen Codier- und Sendevorgang zugeschaltet. Alle sich jeweils im Ruhezustand befindenden Sendekanäle sind mit dem Ruhezustands-Signalisierungs-Codierer verbunden, der zugleich über sämtliche dieser Sendekanäle die deren Ruhezustand signalisierenden Codezeichen aussendet.

EP 0 178 549 A1

Schaltungsanordnung für Fernmeldeanlagen, insbesondere Fernsprechvermittlungsanlagen, mit Sendekanälen für Codezeichen

Die Erfindung bezieht sich auf eine Schaltungsanordnung für Fernmeldeanlagen, insbesondere Fernsprechvermittlungsanlagen, mit einer Anzahl von Sendekanälen, über die nicht nur zur Übertragung von Nachrichten sondern auch zur Signalisierung des sich vom Nachrichtenübertragungs-Zustand unterscheidenden Ruhezustandes Codezeichen ausgesendet werden, und mit jeweils für mehr als einen Sendekanal ausgenutzten Codierern zur Bildung und Aussendung dieser Codezeichen.

Eine Schaltungsanordnung dieser Art ist bereits durch die Nachrichtentechnische Zeitschrift Bd. 33 (1980) Heft 3, S. 150 ff bekannt. Hierin ist beschrieben, daß jeweils zwei Sendekanälen jeweils ein gemeinsamer Codierer und/oder Sender zugeordnet ist. Da sich jeder der Sendekanäle zeitlich gesehen teilweise im Ruhezustand und teilweise im Nachrichtenübertragungs-Zustand befindet, braucht nicht jeder Sendekanal mit einem eigenen Codierer und/oder Sender ausgestattet zu sein, sondern ein gemeinsamer Sender und/oder Codierer kann gemeinsam jeweils für zwei Sendekanäle vorgesehen werden, wobei die Codiervorgänge und/oder Sendevorgänge immer alternativ jeweils für einen der beiden Sendekanäle stattfinden und notfalls jeweils einer der beiden Sendekanäle auf den anderen der beiden Sendekanäle kurzzeitig zu warten hat. Diese bekannte Anordnung ermöglicht es also, die Zahl der Sender und/oder Codierer wesentlich, nämlich auf die Hälfte, herabzusetzen. Dies ist nicht nru von Bedeutung im Hinblick auf den geringeren schaltungstechnischen Aufwand sondern auch im Hinblick auf den beständigen Stromverbrauch und die Notwendigkeit der Ableitung der andauernden Verlustleistung dieser Codierer und/oder Sender. In diesem Zusammenhang ist es von besonderer Bedeutung, daß die betreffenden Copdierer und/oder Sender nicht nur im Nachrichtenübertragungs-Zustand sondern auch im Ruhezustand Codezeichen aussenden, das heißt Stromverbrauch verursachen und Verlustleistung umsetzen, die in Form von Wärme abgeleitet werden muß.

Für die Erfindung besteht deshalb die Aufgabe, in einer Schaltungsanordnung der eingangs angegebenen Art eine weitere Reduzierung von Einrichtungen zu ermögliche, die für die Codierung und Ausendung von Codezeichen ständig in Betrieb sein müssen.

Die Erfindung löst die gestellte Aufgabe dadurch, daß der Anzahl von Sendekanälen mehrere, aber vergleichsweise weniger Nachrichtenübertragungscodierer, die nur zur Codierung und Aussendung von individuellen Nachrichten dienen, gemeinsam zugeordnet sind, und daß ein allen Sendekanälen gemeinsamer Ruhezustands-Signalisierungs-Codierer vorgesehen ist, der nur zur beständigen Aussendung eines Ruhezustands-Codes dient, und daß einem aus dem Ruhezustand in den Nachrichtenübertragungs-Zustand übergehenden Sendekanal ein freier Nachrichtenübertragungscodierer für die Dauer des betreffenden Nachrichtenübertragungsvorganges für den jeweils kanalindividuellen Codier- und Sendevorgang zugeschaltet wird, und daß alle jeweils im Ruhezustand sich befindenden Sendekanäle mit dem Ruhezustands-Signalisierungs-Codierer verbunden sind und daß dieser zugleich über sämtliche dieser Sendekanäle die deren Ruhezustand signalisierenden Codezeichen aussendet.

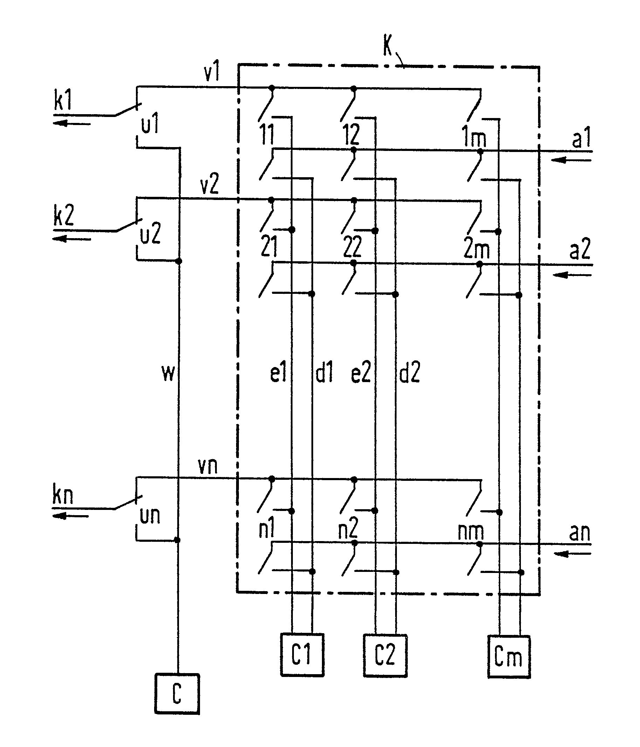

In der Zeichnung ist ein Ausführungsbeispiel der Erfindung nur in wesentlich zu ihrem Verständnis beitragenden Bestandteilen dargestellt, worauf sie jedoch keineswegs beschränkt ist.

Es ist eine Anzahl von Sendekanälen k1 bis kn vorgesehen. Die Senderichtung ist durch Pfeilrichtung angedeutet. Die Sendekanäle sind mit Mittelfedern von Umschaltekontakten u1 bis un verbunden. Die Sendekanäle mögen mehradrige, zum Beispiel zweiadrige Leitungen sein. Im Ruhezustand der Umschaltekontakte u1 bis un sind die Sendekanäle mit Zwischenleitungen v1 bis vn verbunden. Bei der weiteren Beschreibung sei zunächst davon ausgegangen, daß die Sendekanäle einzeln direkt mit den Zwischenleitungen verbunden seien, und daß die die Arbeitsseiten der Umschaltekontakte verbindende, vertikal dargestellte Leitung w, sowie die Einrichtung C nicht existiere.

Es ist ferner ein Koppelfeld K vorgesehen, das Arbeitskontaktpaare 11 bis nm enthält. Die beiden jeweils zu einem Arbeitskontaktpaar, zum Beispiel 11, gehörenden Kontakte werden gleichzeitig betätigt, sie sind also gleichzeitig entweder in ihrer dargestellten Ruhelage oder in der Arbeitslage.- Den Sendekanälen k1 bis kn sowie den Zwischenleitungen v1 bis vn entsprechen Sendeleitungen a1 bis an.

Über jede der genannten Sendeleitungen a1 bis an können sowohl Nachrichten in der angedeuteten Pfeilrichtung als auch ein Kriterium zur Signalisierung des Ruhezustandes der betreffenden Sendeleitung übertragen werden. Eine Sendeleitung, zum Beispiel a1 sowie der ihr jeweils zugeordneteSendekanal, zum Beispiel k1 kann sich also im Nachrichtenübertragungszustand sowie im Ruhezustand befinden. Sowohl im nachrichtenübertragungszustand als auch im Ruhezustand werden Codezeichen über jeden der Sendekanäle ausgesendet, die ihren jeweiligen Zustand signalisieren. Zur Bildung und Aussendung dieser Codezeichen dienen Codierer C1 is Cm.

Den Sendekanälen k1 bis kn sind mehrere aber vergleichsweise weniger Nachrichtenübertragungscodierer C2 bis Cm gemeinsam zugeordnet, die nur zurCodierung und Aussendung von individuellen Nachrichten dienen. Außerdem ist ein allen Sendekanälen k1 bis kn gemeinsamer Ruhezustands-Signalisierungs-Codierer C1 vorgesehen, der nur zur beständigen Aussendung eines Ruhezustands-Codes dient.

Befinden sich sämtliche Sendeleitungen a1 bis an und demgemäß alle Sendekanäle k1 bis kn im Ruhezustand, so befinden sich sämtliche Arbeitskontaktpaare 11, 21, ... bis n1 in ihrer Arbeitslage. In diesem Zustand gelangt also das den Ruhezustand jeder der Sendeleitungen a1 bis an anzeigende Schaltkriterium jeweils über einen der beiden Kontakte eines jeden der zuvor genannten Kontaktpaare und die vertikal dargestellte Leitung d1 zum Ruhezustands-Signalisierungs-Codierer C1. Über die Leitung e1 sendet der Ruhezustands-Signalisierungs-Codierer C1 einen Ruhezustands-Code über sämtliche sich im Ruhezustand befindenden Sendekanäle aus.

Wird über eine der Sendeleitungen a1 bis an eine auszusendende Nachricht übertragen, so geht also diese Sendeleitung aus dem Ruhezustand in den Nachrichtenübertragungs-Zustand über; dies gilt zugleich auch für den der betreffenden Sendeleitung entsprechenden Sendekanal, zum Beispiel k1. Einem in dieser Weise aus dem Ruhezustand in den Nachrichtenübertragungs-Zustand übergehenden Sendekanal, zum Beispiel k1 wird ein freier Nachrichtenübertragungscodierer für die Dauer des betreffenden Nachrichtenübertragungsvorganges zur Abwicklung des jeweils kanalindividuellen Codier- und Sendevorganges zugeschal tet. Es sei also angenommen, daß die Sendeleitung a1 und der ihr entsprechende Sendekanal k1 aus dem Ruhezustand in den Nachrichtenübertragungs-Zustand übergehe. Dies wird auf hier nicht im einzelnen beschrie-

2

bene Weise auch einer Steuereinrichtung für die zu dem Koppelfeld K zusammengefaßten Arbeitskontaktpaare gemeldet. Diese Steuereinrichtung führt nun die beiden Arbeitskontakte des Arbeitskontaktpaares 11 in ihre dargetellte Ruhelage zurück und wählt einen freien Nachrichtenübertragungscodierer aus. Es sei angenommen, daß der Nachrichtencodierer C2 frei sei im betrachteten Betriebszustand. Die genannte Steuereinrichtung wählt also diesen Nachrichtenübertragungscodierer aus und betätigt die beiden Arbeitskontakte, die zu dem Arbeitskontaktpaar 12 zusammengefaßt sind. Nunmehr ist die Sendeleitung a1 über die Leitung d2 mit dem Nachrichtenübertragungscodierer C2 verbunden, und dieser ist wiederum über die Leitung e2 und die Zwischenleitung v1 mit dem Sendekanal k1 verbunden. Anschließend wird der betreffende Codier- und Sendevorgang in an sich bekannter Weise mit dem Nachrichtenübertragungscodierer C2 abgewickelt. In der gleichen Weise kann jedem anderen Sendekanal und jeder zugehörigen Sendeleitung ein freier Nachrichtenübertragungscodierer zugeschaltet werden.

Ist ein Nachrichtenübertragungsvorgang beendet, so wird die beschriebene Zuschaltung eines Nachrichtenübertragungscodierers wieder rückgängig gemacht und die betreffende Sendeleitung sowie der betreffende Sendekanal werden wieder mit dem Ruhezustands-Signalisierungs-Codierer verbunden. Alle jeweils im Ruhezustand sich befindenden Sendekanäle sind also mit dem Ruhezustands-Signalisierungs-Codierer C1 verbunden. Ebenso sind die entsprechenden Sendeleitungen mti dem Ruhezustands-Signalisierungs-Codierer C1 verbunden. Er sendet also zugleich über sämtliche sich im Ruhezustand befindenden Sendekanäle die diesen Ruhezustand signalisierenden Codezeichen aus. In Abwandlung der bisherigen Beschreibung sei nunmehr davon ausgegangen, daß als Ruhezustands-Signalisierungs-Codierer der Codierer C vorgesehen sei, und daß die Umschaltekontakte u1 bis un vorhanden seien. In diesem Falle sind die Codierer C1 bis Cm sämtlich Nachrichtenübertragungscodierer.- Im Ruhezustand jedes der Sendekanäle k1 bis kn sind die ihnen zugeordneten Umschaltekontakte u1 bis un in ihrer Arbeitslage (dargestellt ist die Ruhelage jedes dieser Umschaltekontakte). Im Ruhezustand eines Sendekanales, zum Beispiel k1, ist derselbe über die Leitung w mit dem Ruhezustands-Signalisierungs-Codierer C verbunden. Dieser codiert ein gespeichertes Ruhezustands-Signal und bringt es über den betreffenden Sendekanal zur Aussendung. Sobald der betreffende Sendekanal vom Ruhezustand in den Nachrichtenübertragungs-Zustand übergeht, wird der betreffende Umschaltekontakt, zum Beispiel u1 in seine Ruhelage zurückgelegt, was ebenfalls von der bereits genannten Steuereinrichtung des Koppelfeldes K bewerkstelligt werden möge, und es wird dem betreffenden Sendekanal, zum Beispiel k1, ein freier Nachrichtenübertragungscodierer, zum Beispiel C1, zugeschaltet. Dies geschieht in der bereits beschriebenen Weise.- Es ist also jeweils immer entweder der einem Sendekanal zugeordnete Umschaltekontakt in seiner Arbeitslage oder eines der dem betreffenden Sendekanal entsprechenden Arbeitskontaktpaar. Es kann auch vorgesehen sein, daß der Ruhezustands-Signalisierungs-Codierer C einen Ruhezustands-Signalisierungs-Code gespeichert enthält und demgemäß zur Aussendung bringt. Unter dieser Voraussetzung ist der Ruhezustands-Signalisierungs-Codierer C also auf einen Ruhezustands-Signalcode-Sender beschränkt, weil der Ruhezustands-Signalisierungs-Code bereits gespeichert vorliegt und über die betreffenden Kanäle jeweils nur zur Aussendung gebracht werden muß.

Abschließend sei noch bemerkt, daß die Übertragung der Codezeichen sowohl für Nachrichten als auch für die Signalisierung des Ruhezustandes taktsynchron hinsichtlich sämtlicher Sendekanäle erfolgt. Diese Zusammenhänge sind an sich bekannt und bedürfen hier keiner ins einzelne gehenden Erläuterung. Jedoch sei darauf hingewiesen, daß die Betätigung der Umschaltekontakte u1 bis un sowie der zum Koppelfeld K gehörenden Arbeitskontaktpaare ebenfalls taktsynchron erfolgt, wodurch erreicht wird, daß Codezeichen nicht durch eine während einer Codezeichenaussendung erfolgenden Kontaktbetätigung verstümmelt werden können. Schließlich sei auch noch darauf hingewiesen, daß die bisherige Beschreibung von einer Raummultiplexanordnung ausgeht. In entsprechender Weise kann die gesamte Anordnung auch nach dem Zeitmultiplex-Prinzip aufgebaut sein und betrieben werden.

Wie beschrieben wurde, dient jeder der Nachrichtenübertragungscodierer C1 bis Cm zur Codierung und Aussendung von Nachrichten jeweils über einen Sendekanal. Ebensogut ist es aber auch möglich, mit jeweils einem Nachrichtenübertragungscodierer eine Nachricht gleichzeitig über mehrere Sendekanäle zur Aussendung zu bringen. Dies kann der Fall sein, wenn für die betreffenden Sendekanäle gleiche Nachrichten zur Aussendung zu bringen sind und diese gleichzeitig vorliegen. In diesem Betriebsfall wird der jeweilige Nachrichtenübertragungscodierer zugleich mit den betreffenden mehreren Sendekanälen über entsprechende Kontakte des Koppelfeldes K verbunden. Dies ist von besonderer Bedeutung für die Einschaltesituation einer zentralgesteuerten Fernsprechvermittlungsanlage, wenn also zugleich eine große Anzahl von peripheren Steuereinheiten von zentraler Stelle her einen bestimmten Grundbestand von Daten zu erhalten hat.

**Ansprüche**

1. Schaltungsanordnung für Fernmeldeanlagen, insbesondere Fernsprechvermittlungsanlagen, mit einer Anzahl von Sendekanälen, über die nicht nur zur Übertragung von Nachrichten sondern auch zur Signalisierung des sich vom Nachrichtenübertragungs-Zustand unterscheidenden Ruhezustandes Codezeichen ausgesendet werden, und mit jeweils für mehr als einen Sendekanal ausgenutzten Codierern zur Bildung und Aussendung dieser Codezeichen, **dadurch gekennzeichnet,** daß der Anzahl von Sendekanälen mehrere, aber vergleichsweise weniger Nachrichtenübertragungscodierer, die nur zur Codierung und Aussendung von individuellen Nachrichten dienen, gemeinsam zugeordnet sind, und daß ein allen Sendekanälen gemeinsamer Ruhezustands-Signalisierungs-Codierer vorgesehen ist, der nur zur beständigen Aussendung eines Ruhezustands-Codes dient, und daß einem aus dem Ruhezustand in den Nachrichtenübertragungs-Zustand übergehenden Sendekanal ein freier Nachrichtenübertragungscodierer für die Dauer des betreffenden Nachrichtenübertragungsvorganges für den jeweils kanalindividuellen Codier- und Sendevorgang zugeschaltet wird, und daß alle jeweils im Ruhezustand sich befindenden Sendekanäle mit dem Ruhezustands-Signalisierungs-Codierer verbunden sind und daß dieser zugleich über sämtliche dieser Sendekanäle die deren Ruhezustand signalisierenden Codezeichen aussendet.

2. Schaltungsanordnung nach Anspruch 1, **dadurch gekennzeichnet,** daß der Ruhezustands-Signalisierungs-Codierer ein gespeichertes Ruhezustands-Signal codiert und aussendet.

3. Schaltungsanordnung nach Anspruch 1, **dadurch gekennzeichnet,** daß der Ruhezustands-Signalisierungs-Codierer einen bereits gespeicherten Ruhezustands- Signalisierungs-Code zur Aussendung bringt und hierzu in seiner Funktion auf einen RuhezustandsSignalcode-Sender beschränkt ist.

4. Schaltungsanordnung nach Anspruch 1, **dadurch gekennzeichnet,** daß für den Fall, daß für verschiedene Sendekanäle gleiche Nachrichten zur Aussendung vorliegen, diese Sendekanäle mit ein und demselben Nachrichtenübertragungscodierer verbunden werden, und daß diesem die betreffende Nachricht übergeben wird.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | US-A-4 110 562 (MOED) <br> * Spalte 2, Zeilen 44-68; Spalte 17, Zeilen 43-60; Spalte 18, Zeile 67 - Spalte 19, Zeile 6 * | 1 | H 04 Q 11/04 |
| A | | 2,4 | |
| | --- | | |
| Y | US-A-3 891 805 (FLANAGAN et al.) <br> * Spalte 5, Zeile 45 - Spalte 6, Zeile 25 * | 1 | |
| A | | 4 | |
| | --- | | |
| Y | EP-A-0 028 104 (FUJITSU) <br> * Seite 1, Zeilen 17-26; Seite 10, Zeile 11 - Seite 11, Zeile 36; Seite 15, Zeile 4 - Seite 17, Zeile 7 * | 1 | RECHERCHIERTE SACHGEBIETE (Int. Cl.4) <br><br> H 04 Q |
| A | | 2-4 | |
| | --- | | |
| A | EP-A-0 027 042 (FUJITSU) <br> * Seite 2, Zeilen 19-25; Seite 4, Zeilen 14-25; Seite 8, Zeile 9 - Seite 9, Zeile 2 * | 1-4 | |

Der vorliegende Recherchenbericht wurde für alle Patentansprüche erstellt.

| Recherchenort | Abschlußdatum der Recherche | Prüfer |
|---|---|---|
| DEN HAAG | 23-01-1986 | DE MUYT H.A. |